# EUROPÄISCHE PATENTANMELDUNG

(11) **EP 3 182 139 A1**
(43) Veröffentlichungstag der Anmeldung: **21.06.2017**
(21) Anmeldenummer: 15200824.9
(22) Anmeldetag: 17.12.2015
(51) Int. Cl.: G01P 21/02, G01P 3/48, B65H 26/00, B65H 23/18, H02P 29/00, H02H 7/093

(54) **FEHLERSICHERE GESCHWINDIGKEITSÜBERWACHUNG EINES ANTRIEBS**

(71) Anmelder: Siemens Aktiengesellschaft, 80333 München (DE)
(72) Erfinder: Czerny, Werner, 91315 Höchstadt (DE); Meinardus, Martin, 90409 Nürnberg (DE); Rasenack, Wolf-Martin, 91080 Marloffstein (DE); Vlaic, Iuliu, 91056 Erlangen (DE)

(57) **Zusammenfassung**

Die Erfindung betrifft eine fehlersichere Überwachung der Geschwindigkeit eines Antriebs mit zumindest einem Umrichter, einem Motor und einem Drehzahlgeber, wobei dem Antrieb eine Soll-Drehzahl vorgegeben wird und mittels des Drehzahlgebers eine Ist-Drehzahl erfasst wird. Um unter Vermeidung der Nachteile der bekannten Lösungen einen hohen Sicherheits-Integritätslevel zu erreichen, wird vorgeschlagen, dass eine Ersatzdrehzahl berechnet wird und in einem Sicherheitsprogramm einer Sicherheits-CPU mit je zwei der drei Werte Soll-Drehzahl, Ist-Drehzahl und Ersatzdrehzahl eine Plausibilitätsprüfung durchgeführt wird. Da die berechnete Ersatzdrehzahl unabhängig vom Geber ist, können auch Geberfehler erkannt werden, die durch bisherige Hardware-Lösungen nicht bzw. nur schwer (über Fehlerausschlüsse) erkennbar sind. Die Ersatzdrehzahl kann beispielsweise aus der Ausgangsfrequenz des Umrichters oder aus einem Quotienten aus EMK und magnetischem Fluss bestimmt werden.

## Beschreibung

Die Erfindung betrifft ein Verfahren zur fehlersicheren Überwachung der Geschwindigkeit eines Antriebs mit zumindest einem Umrichter, einem Motor und einem Drehzahlgeber, wobei dem Antrieb eine Soll-Drehzahl vorgegeben wird und mittels des Drehzahlgebers eine Ist-Drehzahl erfasst wird. Die Erfindung betrifft weiter ein System aus zumindest einem Antrieb, der zumindest einen Umrichter, einen Motor und einen Drehzahlgeber aufweist, und Mittel zur Durchführung des genannten Verfahrens. Die Erfindung betrifft zudem die Verwendung des genannten Verfahrens zur mittelbaren Überwachung der Bahngeschwindigkeit einer durch Rollen bewegten Materialbahn in einer Papiermaschine, Rollenschneidmaschine oder Streichmaschine.

Ein derartiges Verfahren bzw. System kommt insbesondere dort zum Einsatz, wo eine Geschwindigkeitsüberwachung von Antrieben mit einem möglichst hohen Sicherheits-Integritätslevel (SIL, auch "Safety Integrity Level", Definition z.B. gemäß IEC/EN 62061) erfolgen soll. Die Verwendung des genannten Verfahrens kommt dabei insbesondere als Weiterentwicklung in Lösungen zum Einsatz, wie sie in der WO 2013/127815 A1 beschrieben sind.

Bekannte Lösungen zur fehlersicheren Geschwindigkeitsüberwachung verwenden hierfür spezielle Safety-Drehzahlgeber oder externe Hardware, Sinus-Cosinus-Geber und safetyzertifizierten Geberanbau. Diese Lösungen sind aber aufwändig und teuer.

Der Erfindung liegt die Aufgabe zugrunde, eine Lösung zur fehlersicheren Überwachung der Geschwindigkeit eines Antriebs vorzuschlagen, die die Nachteile der bekannten Lösungen überwindet.

Diese Aufgabe wird bei einem Verfahren der eingangs genannten Art dadurch gelöst, dass eine Ersatzdrehzahl berechnet wird und in einem Sicherheitsprogramm einer Sicherheits-CPU mit je zwei der drei Werte Soll-Drehzahl, Ist-Drehzahl und Ersatzdrehzahl eine Plausibilitätsprüfung durchgeführt wird.

Die Aufgabe wird weiter durch ein System mit den in Anspruch 6 sowie eine Verwendung des erfindungsgemäßen Verfahrens mit den in Anspruch 8 angegebenen Merkmalen gelöst.

Die erfindungsgemäße Lösung realisiert eine fehlersichere Geschwindigkeitsüberwachung durch ein Berechnungsverfahren in der Software unter Verwendung der bestehenden / herkömmlichen Hardware, d.h. es wird keine spezielle Hardware wie bei den bekannten Lösungen (Safety-Geber etc.) benötigt. Dabei berechnet sich die Ersatzdrehzahl aus der Ausgangsfrequenz des Umrichters bei Drehstromantrieben bzw. dem Quotienten aus EMK (elektromotorische Kraft bzw. Klemmenspannung) und magnetischem Fluss bei Gleichstromantrieben. Durch die drei Plausibilitätsprüfungen (Soll-Drehzahl - Ist-Drehzahl, Ist-Drehzahl - Ersatzdrehzahl, Ersatzdrehzahl - Soll-Drehzahl) können Sicherheitslevel erreicht werden, die bisher nur durch Hardware-Lösungen erreichbar waren.

Zudem können auch Geberfehler erkannt werden, die durch bisherige Hardware-Lösungen nicht bzw. nur schwer (über Fehlerausschlüsse) erkennbar sind. Denn bei einem Verfahren ohne die berechnete Ersatzdrehzahl können durch die regelungstechnische Rückkopplung von Soll- und Istwert (Istwert vom Geber erfasst) nicht sämtliche Geberfehler erkannt werden, die aber zur Erreichung einer fehlersicheren Geschwindigkeitsüberwachung erkannt werden müssen, z.B. konstanter Schlupf zwischen Geber und Geberwelle. Da die berechnete Ersatzdrehzahl unabhängig vom Geber ist, werden diese Fehler durch das erfindungsgemäße Verfahren ebenfalls erkannt.

In einer vorteilhaften Form der Ausgestaltung wird bei den Plausibilitätsprüfungen je zumindest eines der folgenden Kriterien überprüft:
- zumindest ein Wert ändert sich kontinuierlich,
- die Differenz beider Werte liegt innerhalb einer vorgebbaren Toleranz,
- die Differenz beider Werte ändert sich kontinuierlich.
Durch die Prüfung, ob ein Wert und/oder die Differenz beider Werte sich kontinuierlich ändert, wird geprüft, ob ein Rauschen auf dem Wert vorhanden ist, bzw. die Differenz beider Werte auf Rauschen geprüft. Liegt die Differenz beider Werte innerhalb einer vorgebbaren Toleranz, so decken sich beide Werte zumindest weitestgehend. Ist zumindest eines der überprüften Kriterien nicht erfüllt, d.h. es liegt kein Rauschen vor und/oder die jeweiligen Werte decken sich nicht, so ist die entsprechende Plausibilitätsprüfung negativ.

In einer weiteren vorteilhaften Ausführungsform werden die Ist-Drehzahl und/oder die Ersatzdrehzahl im Sicherheitsprogramm auf Überschreiten zumindest eines vorgebbaren positiven Grenzwertes oder auf Unterschreiten zumindest eines vorgebbaren negativen Grenzwertes geprüft. Da die berechnete Ersatzdrehzahl unabhängig vom Geber ist, wird durch die Überprüfung der Ersatzdrehzahl auf Grenzwertüberschreitung die Sicherheit des Systems auch bei bestimmten Geberfehlern (z.B. konstanter Schlupf zwischen Geber und Geberwelle) gewährleistet.

In einer weiteren vorteilhaften Ausführungsform wird dabei bei Überschreiten bzw. Unterschreiten des positiven bzw. negativen Grenzwertes ein Warnsignal ausgegeben und/oder der Motor abgeschaltet. Die Ausgabe eines Warnsignals ermöglicht es einem Bediener, geeignete Maßnahmen zu ergreifen und ggf. auch den Motor manuell abzuschalten. Der Grenzwert kann aber auch so vorgegeben sein, dass eine sofortige Abschaltung des Motors zu bewirken ist.

In einer weiteren vorteilhaften Ausführungsform wird bei negativem Ergebnis zumindest einer Plausibilitätsprüfung ein Warnsignal ausgegeben und/oder der Motor abgeschaltet. Die Ausgabe eines Warnsignals ermöglicht es einem Bediener, geeignete Maßnahmen zu ergreifen und ggf. auch den Motor manuell abzuschalten. Der Grenzwert kann aber auch so vorgegeben sein, dass eine sofortige Abschaltung des Motors zu bewirken ist.

In einer vorteilhaften Form der Ausgestaltung des Systems weist der Umrichter Mittel zur Berechnung der Ersatzdrehzahl auf. Durch die Vornahme dieser einfachen Berechnung direkt im Umrichter anstatt in der Sicherheits-CPU wird die Einhaltung eines hohen Safety-Integrety-Levels nicht beeinflusst.

Das erfindungsgemäße Verfahren eignet sich insbesondere vorteilhaft zur mittelbaren Überwachung der Bahngeschwindigkeit einer durch Rollen bewegten Materialbahn in einer Papiermaschine, Rollenschneidmaschine oder Streichmaschine. Unter einer Materialbahn wird dabei eine Bahn aus einem Flachmaterial, beispielsweise aus Papier, Kunststoff oder Metall, verstanden.

Bei Maschinen mit durchlaufenden, durch Rollen bewegten Materialbahnen sind die Umfangsgeschwindigkeiten der antreibenden Rollen und die damit zusammenhängende Bahngeschwindigkeit der Materialbahnen zu überwachen. Insbesondere sind zwei Geschwindigkeitsschwellenwerte zu berücksichtigen: eine maximale mechanische Bahngeschwindigkeit, die nicht überschritten werden darf, um eine Beschädigung der Maschine zu vermeiden, und eine so genannte sichere Geschwindigkeit, bei der es den Bedienern erlaubt ist, Gefahrenbereiche während der Bewegung der Maschine zu betreten, beispielsweise um Wartungsarbeiten durchzuführen.

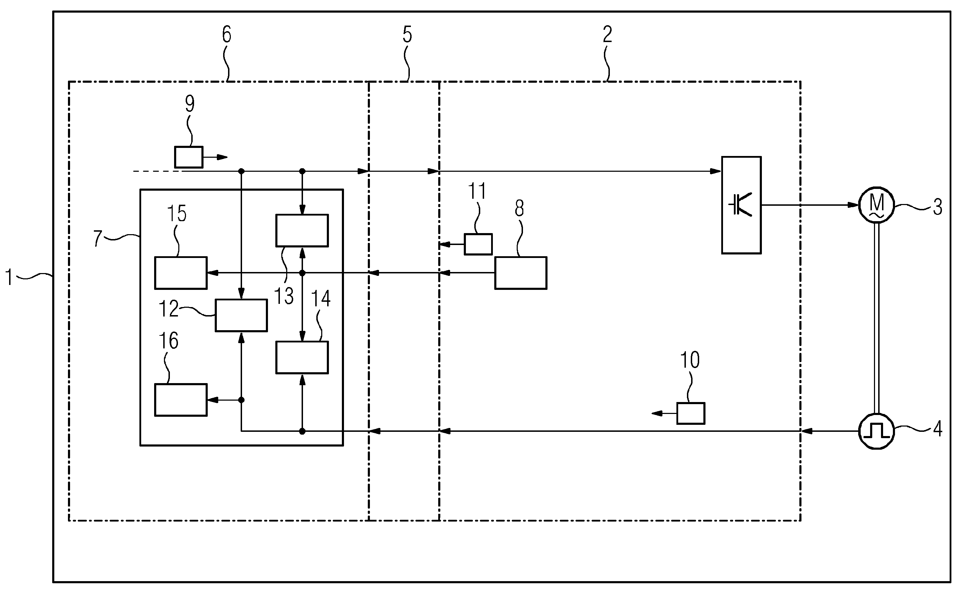

Im Folgenden wird die Erfindung anhand des in der Figur dargestellten Ausführungsbeispiels näher beschrieben und erläutert. Die Figur zeigt:
eine schematische Darstellung einer erfindungsgemäßen fehlersicheren Geschwindigkeitsüberwachung.

Die Figur zeigt ein System 1 aus einem Antrieb, der einen Umrichter 2, einen Motor 3 und einen Drehzahlgeber 4 aufweist, und einer Sicherheits-CPU 6 mit einem Sicherheitsprogramm 7. Umrichter 2 und Sicherheits-CPU 6 sind beispielhaft über einen Feldbus 5 als Kommunikationsverbindung gekoppelt. Im dargestellten Ausführungsbeispiel weist der Umrichter 2 selbst Mittel 8 zur Berechnung einer Ersatzdrehzahl 11 auf. Dabei berechnet sich die Ersatzdrehzahl 11 aus der Ausgangsfrequenz des Umrichters 2 bei Drehstromantrieben bzw. dem Quotienten aus EMK (elektromotorische Kraft bzw. Klemmenspannung) und magnetischem Fluss bei Gleichstromantrieben. Dem Umrichter 2 wird eine Soll-Drehzahl 9 vorgegeben, und der Drehzahlgeber 4 liefert eine Ist-Drehzahl 10 zurück.

Im Sicherheitsprogramm 7 der Sicherheits-CPU 6 werden nun je zwei dieser drei Drehzahl-Werte auf Plausibilität überprüft, d.h. es findet eine Plausibilitätsüberprüfung 12 zwischen Soll-Drehzahl 9 und Ist-Drehzahl 10, eine Plausibilitätsüberprüfung 13 zwischen Soll-Drehzahl 9 und Ersatzdrehzahl 11 und eine Plausibilitätsüberprüfung 14 zwischen Ersatzdrehzahl 11 und Ist-Drehzahl 10 statt. Bei jeder Plausibilitätsüberprüfung 12-14 wird vorteilhafterweise überprüft, ob mindestens einer der jeweiligen Werte sich kontinuierlich ändert, d.h. mit einem Rauschen belegt ist, ob die Differenz beider Werte sich in einem vorgebbaren Toleranzbereich bewegt, d.h. sich beide Werte zumindest im Wesentlichen decken (aber nicht dauerhaft exakt decken), und ob die Differenz beider Werte sich kontinuierlich ändert (also ebenfalls, ob ein Rauschen vorliegt). Sind alle drei Plausibilisierungen 12-14 positiv, wird die Drehzahl des Motors 3 als sicher angenommen.

Zusätzlich werden sowohl die Ist-Drehzahl 10 als auch die Ersatzdrehzahl 11 auf Überschreiten eines Grenzwertes überprüft 15, 16. Hierdurch wird die Sicherheit des Systems 1 auch bei bestimmten Geberfehlern (wie z.B. konstantem Schlupf zwischen Geber und Geberwelle) gewährleistet, die sonst nicht oder nur schwer (über Fehlerausschlüsse) festgestellt werden können.

Zusammenfassend betrifft die Erfindung eine fehlersichere Überwachung der Geschwindigkeit eines Antriebs mit zumindest einem Umrichter, einem Motor und einem Drehzahlgeber, wobei dem Antrieb eine Soll-Drehzahl vorgegeben wird und mittels des Drehzahlgebers eine Ist-Drehzahl erfasst wird. Um unter Vermeidung der Nachteile der bekannten Lösungen einen hohen Sicherheits-Integritätslevel zu erreichen, wird vorgeschlagen, dass eine Ersatzdrehzahl berechnet wird und in einem Sicherheitsprogramm einer Sicherheits-CPU mit je zwei der drei Werte Soll-Drehzahl, Ist-Drehzahl und Ersatzdrehzahl eine Plausibilitätsprüfung durchgeführt wird. Da die berechnete Ersatzdrehzahl unabhängig vom Geber ist, können auch Geberfehler erkannt werden, die durch bisherige Hardware-Lösungen nicht bzw. nur schwer (über Fehlerausschlüsse) erkennbar sind.

## Patentansprüche

1. Verfahren zur fehlersicheren Überwachung der Geschwindigkeit eines Antriebs mit zumindest einem Umrichter (2), einem Motor (3) und einem Drehzahlgeber (4), wobei dem Antrieb eine Soll-Drehzahl (9) vorgegeben wird und mittels des Drehzahlgebers (4) eine Ist-Drehzahl (10) erfasst wird,
**dadurch gekennzeichnet, dass** eine Ersatzdrehzahl (11) berechnet wird und in einem Sicherheitsprogramm (7) einer Sicherheits-CPU (6) mit je zwei der drei Werte Soll-Drehzahl (9), Ist-Drehzahl (10) und Ersatzdrehzahl (11) eine Plausibilitätsprüfung (12-14) durchgeführt wird.

2. Verfahren nach Anspruch 1,
wobei bei den Plausibilitätsprüfungen (12-14) je zumindest eines der folgenden Kriterien überprüft wird:
- zumindest ein Wert ändert sich kontinuierlich,
- die Differenz beider Werte liegt innerhalb einer vorgebbaren Toleranz,
- die Differenz beider Werte ändert sich kontinuierlich.

3. Verfahren nach Anspruch 1 oder 2,
wobei die Ist-Drehzahl (10) und/oder die Ersatzdrehzahl (11) im Sicherheitsprogramm (7) auf Überschreiten zumindest eines vorgebbaren positiven Grenzwertes oder auf Unterschreiten zumindest eines vorgebbaren negativen Grenzwertes geprüft werden (15, 16).

4. Verfahren nach Anspruch 3,
wobei bei Überschreiten bzw. Unterschreiten des positiven bzw. negativen Grenzwertes ein Warnsignal ausgegeben und/oder der Motor (3) abgeschaltet wird.

5. Verfahren nach einem der vorhergehenden Ansprüche,
wobei bei negativem Ergebnis zumindest einer Plausibilitätsprüfung (12-14) ein Warnsignal ausgegeben und/oder der Motor (3) abgeschaltet wird.

6. System (1) aus zumindest einem Antrieb, der zumindest einen Umrichter (2), einen Motor (3) und einen Drehzahlgeber (4) aufweist, und einer Sicherheits-CPU (6), wobei die Sicherheits-CPU (6) zumindest ein Sicherheitsprogramm (7) zur Durchführung eines Verfahrens nach einem der vorhergehenden Ansprüche aufweist.

7. System nach Anspruch 6,
wobei der Umrichter (2) Mittel (8) zur Berechnung der Ersatzdrehzahl (11) aufweist.

8. Verwendung des Verfahrens nach einem der Ansprüche 1 bis 5 zur mittelbaren Überwachung der Bahngeschwindigkeit einer durch Rollen bewegten Materialbahn in einer Papiermaschine, Rollenschneidmaschine oder Streichmaschine.
